# EUROPEAN PATENT APPLICATION

(11) **EP 4 575 788 A2**
(43) Date of publication of application: **25.06.2025**
(21) Application number: 25172620.4
(22) Date of filing: 25.04.2025
(51) Int. Cl.: G06F 9/50

(54) **DATA PROCESSING METHOD, APPARATUS AND MEDIUM APPLIED TO A DISTRIBUTED SYSTEM**

(30) Priority: 05.07.2024 CN 202410903489
(71) Applicant: KunlunXin Technology (Beijing) Company Limited, Haidian District Beijing 100101 (CN)
(72) Inventor: ZHANG, Xiaoci, Beijing, 100101 (CN); CHEN, Qingshu, Beijing, 100101 (CN); WANG, Yong, Beijing, 100101 (CN); OUYANG, Jian, Beijing, 100101 (CN)
(74) Representative: von Tietzen und Hennig, Nikolaus

(57) **Abstract**

The present disclosure provides a data processing method, an apparatus and a medium applied to a distributed system, relates to the field of computer technology, and particularly to the field of chip technology and distributed data processing technology. The implementation is: for each of a plurality of data blocks included in data to be processed, dividing the data block into a plurality of first sub-blocks corresponding to a plurality of computing unit groups respectively; for each first sub-block of the plurality of first sub-blocks, dividing the first sub-block, based on a target computing unit group corresponding to the first sub-block, into a plurality of second sub-blocks corresponding to the plurality of computing units in the target computing unit group, respectively; determining, by processing each second sub-block utilizing the corresponding computing unit of the second sub-block , a plurality of first processing results output by the plurality of computing units respectively; and determining a processing result of the first sub-block by performing a data reduction operation on the plurality of first processing results utilizing the target computing unit group.

## Description

### TECHNICAL FIELD

The present disclosure relates to the field of computer technology, particularly to the field of chip technology and distributed data processing technology, and specifically to a data processing method, an apparatus, a computer-readable storage medium, and a computer program product applied to a distributed system.

### BACKGROUND ART

Artificial intelligence is the discipline that studies how to enable computers to simulate certain thinking processes and intelligent behaviors of a human being (such as learning, reasoning, thinking, planning, etc.), including both hardware-level and software-level technologies. The artificial intelligence hardware technologies generally include technologies such as sensors, special artificial intelligence chips, cloud computing, distributed storage, big data processing, etc.; The artificial intelligence software technologies mainly include computer vision technology, speech recognition technology, natural language processing technology, machine learning/deep learning, big data processing technology, knowledge diagram technology and other major technological directions.

With the development of artificial intelligence technology, more and more applications have achieved results far beyond traditional algorithms based on artificial intelligence technology. Deep learning is a data-intensive algorithm and a computation-intensive algorithm, and in order to improve the training speed and inference speed of a large-scale deep learning model, a distributed system containing multiple computing units or multiple computing unit groups can be utilized to perform data processing to meet computational power requirements.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

### SUMMARY OF THE INVENTION

The present disclosure provides a data processing method, an electronic device, a computer readable storage medium, and a computer program product applied to a distributed system.

According to one aspect of the present disclosure, there is provided a data processing method applied to a distributed system, where a plurality of computing units in the distributed system can constitute a plurality of computing unit groups, and data to be processed includes a plurality of data blocks, comprising: for each data block of the plurality of data blocks, dividing the data block into a plurality of first sub-blocks corresponding to the plurality of computing unit groups respectively; for each first sub-block of the plurality of first sub-blocks, dividing the first sub-block, based on a target computing unit group corresponding to the first sub-block, into a plurality of second sub-blocks corresponding toa plurality of computing units in the target computing unit group respectively; determining, by processing each second sub-block of the plurality of second sub-blocks utilizing the corresponding computing unit of the second sub-block, a plurality of first processing results output by the plurality of computing units in the target computing unit group respectively; and determining a processing result of the first sub-block by performing a data reduction operation on the plurality of first processing results utilizing the target computing unit group.

According to another aspect of the present disclosure, there is provided a data processing apparatus applied to a distributed system, wherein a plurality of computing units in the distributed system can constitute a plurality of computing unit groups, and data to be processed includes a plurality of data blocks, comprising: a first division unit, configured to divide, for each data block of the plurality of data blocks, the data block into a plurality of first sub-blocks corresponding to the plurality of computing unit groups respectively; a second division unit, configured to divide, for each first sub-block of the plurality of first sub-blocks, based on a target computing unit group corresponding to the first sub-block, the first sub-block into a plurality of second sub-blocks corresponding to a plurality of computing units in the target computing unit group respectively; a first processing unit, configured to determine, by processing each second sub-block of the plurality of second sub-blocks utilizing the corresponding computing unit of the second sub-block, a plurality of first processing results output by the plurality of computing units in the target computing unit group respectively; and a second processing unit, configured to determine a processing result of the first sub-block by performing a data reduction operation on the plurality of first processing results utilizing the target computing unit group.

According to another aspect of the present disclosure, there is provided a non-transitory computer-readable storage medium storing computer instructions, where the computer instructions are used to enable the computer to perform the above data processing method.

According to another aspect of the present disclosure, there is provided a computer program product, including a computer program, where the computer program is able to implement the above described data processing method when executed by a processor.

According to one or more embodiments of the present disclosure, the stability of data processing results can be ensured, which in turn improves the accuracy of distributed data processing.

It should be understood that the content described in this section is not intended to identify key or important features of the embodiments of the present disclosure, nor is it intended to limit the scope of the present disclosure. Other features of the present disclosure will become readily understood from the following description.

### BRIEF DESCRIPTION OF THE DRAWINGS

The drawings illustrate embodiments and constitute a part of the specification, and are used together with the textual description of the specification to explain the example implementations of the embodiments. The illustrated embodiments are for illustrative purposes only and do not limit the scope of the claims. Throughout the drawings, like reference numerals refer to similar but not necessarily identical elements.
FIG. 1 illustrates a schematic diagram of an example system in which various methods described herein can be implemented according to example embodiments of the present disclosure;
FIG. 2 illustrates a flowchart of a data processing method applied to a distributed system according to example embodiments of the present disclosure;
FIG. 3 illustrates a structural schematic diagram of a distributed system according to example embodiments of the present disclosure;
FIG. 4 illustrates a schematic diagram of a data processing process according to example embodiments of the present disclosure;
FIG. 5 illustrates a schematic diagram of a data processing process according to example embodiments of the present disclosure;
FIG. 6 illustrates a structural block diagram of a data processing apparatus applied to a distributed system according to example embodiments of the present disclosure;
FIG. 7 illustrates a structural block diagram of an example electronic device that can be used to implement embodiments of the present disclosure.

### DETAILED DESCRIPTION OF THE EMBODIMENTS

Example embodiments of the present disclosure are described below with reference to the accompanying drawings, which include various details of the embodiments of the present disclosure to facilitate understanding, and should be considered as example only. Therefore, those of ordinary skill in the art should realize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms "first", "second" and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof.

A plurality of computing unit groups can be utilized in a distributed system to perform data operations and collective communication operations to achieve data synchronization. In the prior art, data to be processed is generally distributed dynamically based on the current load conditions, resulting in the same data possibly being distributed to different computing unit groups in different rounds. It would be understood that when a distributed system is utilized for data processing, it is necessary to achieve data synchronization and data exchange among various nodes in the system through various types of collective communication operations. Due to the differences in the data collective logics of different computing unit groups, the stability of computation results may be affected.

For example, when the plurality of computing units in the distributed system can constitute a plurality of ring-topology computing unit groups, each ring-topology computing unit group can apply a ring all-reduce algorithm to reduce the data result of each computing unit in the computing unit group. Since the data exchange and accumulation steps in the ring all-reduce algorithm process are based on a unidirectional ring topology and sequentially accumulating the data in each computing unit along a fixed direction, different data accumulation order (i.e., the arrangement order of each computing unit in the ring topology) may lead to differences in the accumulated results, e.g., may be affected by the rounding operation in the addition computation, which may in turn affect the stability of the data processing result.

On this basis, the present disclosure provides a data processing method, when a plurality of computing units in a system can constitute a plurality of computing unit groups, taking data blocks in data to be processed as the basis for division, each data block is divided into a plurality of sub-blocks and allocated to a plurality of computing unit groups to ensure that the division-mapping between the data blocks and the computing unit groups remains stable, and thus ensure the stability of the data processing result.

Embodiments of the present disclosure will be described in detail below with reference to the accompanying drawings.

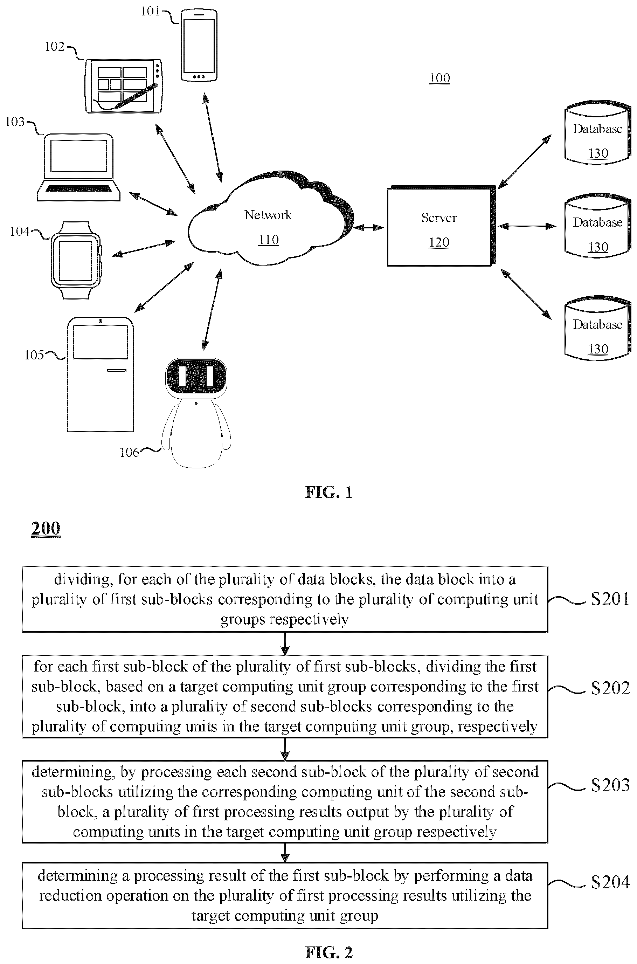

FIG. 1 illustrates a schematic diagram of an example system 100 in which various methods and apparatuses described herein may be implemented in accordance with embodiments of the present disclosure. Referring to FIG. 1, the system 100 includes one or more client devices 101, 102, 103, 104, 105 and 106, a server 120, and one or more communication networks 110 that couple the one or more client devices to the server 120. The client devices 101, 102, 103, 104, 105, and 106 can be configured to execute one or more applications.

In embodiments of the present disclosure, the server 120 can run one or more services or software applications that enable execution of an data processing method.

In some embodiments, the server 120 can also provide other services or software applications, which may include non-virtual environments and virtual environments. In some embodiments, these services can be provided as web-based services or cloud services, such as to the user of the client devices 101, 102, 103, 104, 105, and/or 106 under a Software as a Service (SaaS) model.

In the configuration shown in FIG. 1, the server 120 can include one or more components that implement functions performed by the server 120. These components can include software components, hardware components, or a combination thereof that are executable by one or more processors. The user operating the client devices 101, 102, 103, 104, 105, and/or 106 can sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The user can use the client devices 101, 102, 103, 104, 105, and/or 106 to send data processing requests or data to be edited. The client device can provide an interface that enables the user of the client device to interact with the client device. The client device can also output information to the user via the interface. Although FIG. 1 depicts only six client devices, those skilled in the art will be able to understand that the present disclosure can support any number of client devices.

The client devices 101, 102, 103, 104, 105, and/or 106 can include various types of computer devices, such as portable handhold devices, general-purpose computers (such as personal computers and laptop computers), workstation computers, wearable devices, smart screen devices, self-service terminal devices, service robots, gaming systems, thin clients, various message transceiving devices, sensors, or other sensing devices, and the like. These computer devices can run various types and versions of software applications and operating systems, such as Microsoft Windows, Apple iOS, Unix-like operating systems, Linux or Linux-like operating systems (e.g., Google Chrome OS); or include various mobile operating systems, such as Microsoft Windows Mobile OS, iOS, Windows Phone, Android. The portable handhold devices can include cellular telephones, smart phones, tablet computers, personal digital assistants (PDA), and the like. The wearable devices can include head-mounted displays, such as smart glasses, and other devices. The gaming systems can include various handhold gaming devices, Internet-enabled gaming devices, and the like. The client devices can perform various different applications, such as various applications related to the Internet, communication applications (e.g., e-mail applications), Short Message Service (SMS) applications, and can use various communication protocols.

The network 110 may be any type of network that is well known to those skilled in the art, which can support data communication using any of a variety of available protocols (including but not limited to TCP/IP, SNA, IPX, etc.). By way of example only, one or more networks 110 can be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (for example, Bluetooth, WiFi), and/or any combination of these and/or other networks.

The server 120 can include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that can be virtualized to maintain virtual storage devices of a server). In various embodiments, the server 120 can run one or more services or software applications that provide the functions described below.

The computing unit in the server 120 can run one or more operating systems, including any of the operating systems described above and any commercially available server operating system. The server 120 can also run any of a variety of additional server applications and/or intermediate layer applications, including a HTTP server, an FTP server, a CGI server, a Java server, a database server, etc.

In some implementations, the server 120 can include one or more applications to analyze and merge data feeds and/or event updates received from the user of the client devices 101, 102, 103, 104, 105, and/or 106. The server 130 can also include one or more applications to display the data feeds and/or the real-time events via one or more display devices of the client devices 101, 102, 103, 104, 105, and/or 106.

In some embodiments, the server 120 can be a server of a distributed system, or a server incorporating a block chain. The server 120 can also be a cloud server, or an intelligent cloud computing server or an intelligent cloud host with an artificial intelligence technology. The cloud server is a host product in a cloud computing service system to address the defects of difficult management and limited service scalability exiting in a traditional physical host and virtual private server (VPS) service.

The system 100 can also include one or more databases 130. In some embodiments, these databases can be used to store data and other information. For example, one or more of the databases 130 can be used to store information such as audio files and video files. The databases 130 can reside in various locations. For example, the database used by the server 120 may be local to the server 120, or may be remote from the server 120 and may communicate with the server 120 via a network-based or dedicated connection. The databases 130 may be of different types. In some embodiments, the database used by the server 120 can be, for example, a relational database. One or more of these databases can store, update, and retrieve data to and from the databases in response to a command.

In some embodiments, one or more of the databases 130 can also be used by an application to store application data. The databases used by the application can be different types of databases, such as a key-value repository, an object repository, or a conventional repository supported by a file system.

The system 100 of FIG. 1 can be configured and operated in various ways to enable application of various methods and apparatuses described according to the present disclosure.

FIG. 2 illustrates a flowchart of a data processing method 200 applying to a distributed system according to example embodiment of the present disclosure, where a plurality of computing units in the distributed system can constitute a plurality of computing unit groups, and data to be processed includes a plurality of data blocks. As shown in FIG. 2, the method 200 includes:
Step S201, dividing, for each of the plurality of data blocks, the data block into a plurality of first sub-blocks corresponding to the plurality of computing unit groups respectively;
Step S202, for each first sub-block of the plurality of first sub-blocks, dividing the first sub-block, based on a target computing unit group corresponding to the first sub-block, into a plurality of second sub-blocks corresponding to the plurality of computing units in the target computing unit group, respectively;
Step S203, determining, by processing each second sub-block of the plurality of second sub-blocks utilizing the corresponding computing unit of the second sub-block, a plurality of first processing results output by the plurality of computing units in the target computing unit group respectively; and
Step S204, determining a processing result of the first sub-block by performing a data reduction operation on the plurality of first processing results utilizing the target computing unit group.

By applying the above method 200, in the case where the plurality of computing units in a system can constitute a plurality of computing unit groups, taking data blocks in data to be processed as the basis for division, each data block can be divided into a plurality of sub-blocks and allocated to a plurality of computing unit groups to ensure that the mapping relationship between the division results of data blocks and the computing unit groups remains stable, and thus ensure the stability of the data processing result.

In some examples, the data block information in the data to be processed may be explicit, e.g., the data to be processed may be a sequence of data blocks constituted by a plurality of data blocks that are naturally segmented. In some examples, the data to be processed may be divided into a plurality of data blocks before step S201, for example, the data to be processed may be divided into a plurality of data blocks according to a predetermined block size.

In some examples, a computing unit group can be a collection of a plurality of computing units capable of accomplishing a set of collective communication operations in a distributed system. It could be understood that the computing units included in different computing unit groups may be the same or may be different. For example, when the aforementioned collective communication operation is a ring all-reduce operation performed based on a unidirectional ring topology, and when the plurality of computing units in the distributed system can constitute N ring topologies, then the number of computing unit groups in the distributed system is 2N.

According to some embodiments, the plurality of computing units in the target computing unit group constitute a ring topology, and the determining a processing result of the first sub-block by performing a data reduction operation on the plurality of first processing results using the target computing unit group in step S204 comprises: sequentially accumulating the first processing result of each computing unit in the target computing unit group based on the arrangement order of the plurality of computing units in the target computing unit group in the ring topology; and determining a processing result of the first sub-block based on the accumulated result. As a result, during the implementation of collective communication based on the ring all reduce algorithm, the accumulation order of the intermediate processing result of each computing unit remains unchanged by applying the data slicing and computational power allocation manner described in method 200, which in turn ensures the stability of the accumulated result.

According to some embodiments, the sequentially accumulating the corresponding first processing result of each computing unit in the target computing unit group based on the arrangement order of the plurality of computing units in the target computing unit group in the ring topology comprises: performing the following actions utilizing each of the plurality of computing units in the target computing unit group: receiving data to be accumulated from a preceding computing unit located before the computing unit in the ring topology; determining intermediate data by accumulating the data to be accumulated and the first processing result of the computing unit; and sending the intermediate data to a succeeding computing unit located after the computing unit in the ring topology, such that the succeeding computing unit can accumulate the intermediate data and the first processing result of the succeeding computing unit. As a result, the data reduction operation of all the computing units can be achieved more efficiently based on the ring iteration operation.

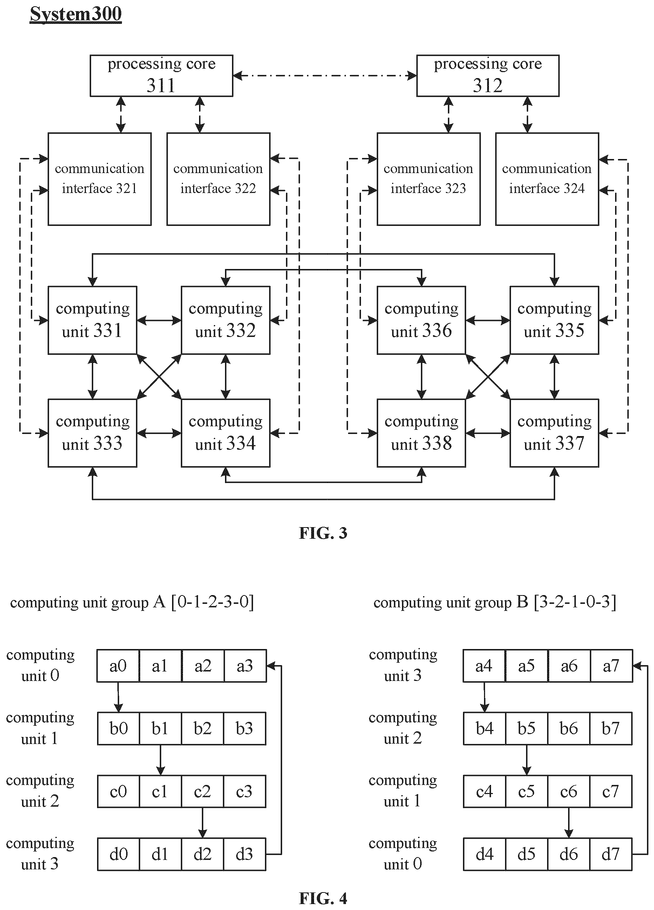

FIG. 3 illustrates a structural schematic diagram of a distributed system 300 according to example embodiments of the present disclosure. As shown in FIG. 3, in this example embodiment, the system 300 includes 2 processing cores (processing core 311 and processing core 312), 4 communication interfaces (communication interface 321, communication interface 322, communication interface 323, and communication interface 324), and 8 computing units. The bi-directional arrows indicated by dotted line in the figure illustrate first communication links between the processing cores, the bi-directional arrows indicated by dashed line in the figure illustrate second communication links between the processing cores and the computing units, and the bi-directional arrows indicated by solid line in the figure illustrate third communication links between the computing units. As can be seen by referencing the multiple sets of point-to-point third communication links between the 8 computing units illustrated in FIG. 3, the 8 nodes can constitute the following four unidirectional rings which can be used to perform data accumulation operations:
a unidirectional ring A: computing unit 331 - computing unit 332 - computing unit 336 - computing unit 335 - computing unit 337 - computing unit 338 - computing unit 334-computing unit 333;
a unidirectional ring B: computing unit 333 - computing unit 334 - computing unit 338 - computing unit 337 - computing unit 335 - computing unit 336 - computing unit 332 - computing unit 331;
a unidirectional ring C: computing unit 331 - computing unit 335 - computing unit 338 - computing unit 336 - computing unit 337 - computing unit 333 - computing unit 332 - computing unit 334;
a unidirectional ring D: computing unit 334 - computing unit 332 - computing unit 333 - computing unit 337- computing unit 336- computing unit 338 - computing unit 335 - computing unit 331.

It would be understood that in the case where the interconnection structure between the plurality of computing units has been determined, the plurality of unidirectional ring topologies in the system can be determined based on various prior probing tools or analysis algorithms, then stored as explicit topology information, and directly applied when executing the method 200 described in the present disclosure.

In some examples, the processing core may be a CPU (Central Processing Unit), the operation node may be a GPU (Graphics Processing Unit), the first communication link may be a QPI (Quick Path Interconnect) link, the second communication link may be a PCI (Peripheral Component Interconnect) link, and the third communication link may be an NV Link-based point-to-point link.

As described above, in conventional techniques, the data exchange and accumulation tasks are dynamically distributed based on respective load conditions of the plurality of ring topologies, for example, the data to be processed in the same batch (with the batch size parameter being a variable parameter) may be evenly distributed to the plurality of ring topologies based on the data size. In this case, when certain accumulation operation in data processing request A with a data size of 8192 and certain accumulation operation in data processing request B with a data size of 8192 are combined into the same batch (i.e., the batch size is 2), the first 4096 data of the data processing request A may be distributed to the unidirectional ring A, i.e., to perform node data accumulation according to the arrangement order of the nodes in the unidirectional ring A, and the next 4096 data may be distributed to the unidirectional ring B, i.e., to perform node data accumulation according to the arrangement order of the nodes in the unidirectional ring B. However, when the accumulation operation in the data processing request A is placed separately in a batch (i.e., the batch size is 1), the 8192 data of the data processing request A may be equally distributed to the four unidirectional rings described above, and each unidirectional ring is responsible for processing 2048 data. In such implementation, the accumulation order of each data element contained in the data processing request A in the accumulation operation may vary, resulting in the instability of the calculation result.

In an example, when the size of the input data to be processed is 8, the data to be processed may be sliced and distributed to a plurality of computing unit groups for processing. When the number of computing unit groups in the distributed system is 2, the size of the first slicing result sliced based on the data to be processed is 4.

On this basis, a multi-step operation can be implemented within each computing unit group to process the first slicing result of the computing unit group. FIG. 4 illustrates a schematic diagram of a data processing process according to example embodiments of the present disclosure. As shown in FIG. 4, the two computing unit groups, constituted by computing unit 0, computing unit 1, computing unit 2, and computing unit 3, can implement data accumulation based on ring iteration steps, and each computing unit performs transmission and accumulation on the second slicing result of size 1 in each step. FIG. 4 illustrates a schematic diagram of the transmission process of the first step. In this case, the accumulated results obtained by the computing unit group A are [a0+b0+c0+d0, b1+c1+d1+a1, c2+d2+a2+b2, d3+a3+b3+c3], and the accumulated results obtained by the computing unit group B are [d4+a4+b4+c4, c5+d5+a5+b5, b6+c6+d6+a6, a7+b7+c7 +d7].

In this example, assuming that each data processing request has a length of 4, the input data to be processed contains two data processing requests (e.g., data processing request query0=[a0, a1, a2, a3] and data processing request query1=[a4, a5, a6, a7] of computing unit 0), and the two data processing requests are allocated to the computing unit group A and the computing unit group B for processing respectively. The data accumulation order of the computing unit group A and the computing unit group B are different, which may lead to differences in the processing results of different data processing requests.

In another example, assuming that each data processing request has a length of 2, the input data to be processed contains four data processing requests, and each computing unit group is responsible for processing two data processing requests (e.g., the data processing requests corresponding to the computing unit group A in computing unit 0 are query0 [a0, a1,] and query1 [a2, a3 ]). Differences in the starting positions of different data processing requests within the slicing results of the same computing unit group can also lead to differences in the data accumulation order, which may in turn result in differences in the processing results of different data processing requests.

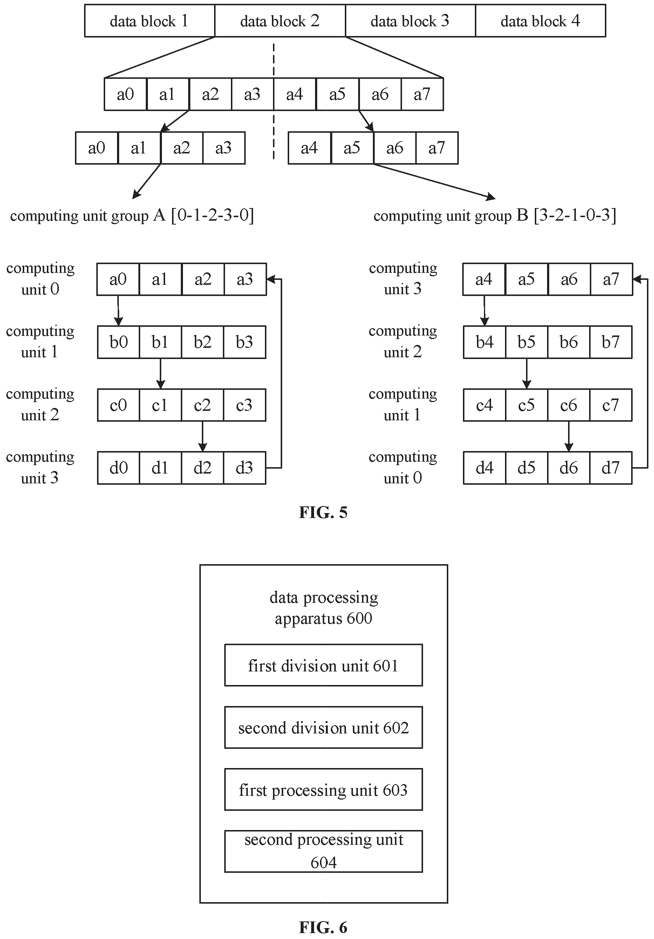

FIG. 5 illustrates a schematic diagram of a data processing process according to example embodiments of the present disclosure. As shown in FIG. 5, in this example embodiment, by applying the data slicing and computational power allocation method described in the above method 200, the data block in the data to be processed can be used as the smallest slicing unit. For example, when the size of the data block is 8 and the number of the computing unit groups is 2, two first sub-blocks of [a0, a1, a2, a3] and [a4, a5, a6, a7] can be obtained, and the two first sub-blocks are allocated to the computing unit group A and the computing unit group B for processing, respectively. In this case, regardless of how many data blocks are included in the data processing request, the computational power allocation method and the data processing logic, corresponding to each data element, can remain stable.

In an example, the data processing process of FIG. 5 is, for example, implemented based on the following steps:
Step S1, sequentially slicing each data block into a first number (i.e., the number of computing unit groups) of first sub-blocks, and allocating each first sub-block to a computing unit group for processing;
Step S2, sequentially slicing each first sub-block into a second number (i.e., the number of computing units in the computing unit group) of second sub-blocks;
Step S3, traversing all the data blocks within each computing unit, selecting a second sub-block from inside of the corresponding first sub-block of the computing unit group and sending it to the succeeding computing unit in the computing unit group, and it could be understood that the arrangement ordinal numbers of the second sub-blocks selected by each computing unit are different from each other;

By cyclically executing the above step S3, each computing unit in each computing unit group is enabled, in each round, to receive data from the preceding computing unit in the computing unit group, to perform an accumulation calculation with the corresponding data of the computing unit, and then to send the accumulated result to the succeeding computing unit in the computing unit group. When the ring iteration steps are completed, each computing unit in each computing unit group has the data accumulated result of all the computing units in the computing unit group.

According to some embodiments, the data to be processed is obtained by utilizing a feature encoding network, and where the plurality of data blocks included in the data to be processed are obtained by utilizing a division operation as follows: dividing, based on the output dimension of the feature encoding network, the data to be processed into a plurality of data blocks of the same size. As a result, by applying the above method 200, the feature data processing can be implemented, and the data blocks in the data to be processed can be determined based on the dimension of the feature encoding vector space, fixed-size data blocks can be obtained more easily and efficiently, the computational load of each computing unit group in the distributed system can be balanced, and the processing efficiency can be improved .

In some examples, the data to be processed may be obtained by performing embedding representation on natural language text data. By performing operations on the encoded data of the textual data, various types of natural language processing tasks can be achieved, such as mapping the natural language textual data to an embedding space to obtain a semantic feature tensor, and then performing operations such as semantic analysis, entity extraction, and the like based on this. It would be understood that the data length of the semantic feature tensor in the embedding space is necessarily an integer multiple of the embedding space dimension, in which case the data to be processed can be easily and efficiently divided into an integer number of data blocks by dividing the data blocks of the data to be processed based on the embedding space dimension, so that the stability of the distributed processing logic of each data block can be ensured by performing data slicing and computational power allocation operations on the data block, thereby ensuring the stability of the operation result of the data to be processed.

According to some embodiments, dividing the data to be processed into a plurality of data blocks of the same size based on the output dimension of the feature encoding network comprises: dividing the data to be processed into a plurality of data blocks of the same size based on the output dimension of the feature encoding network and the data format of the data to be processed. As a result, by further combining the data format, the amount of data of each data block can be determined accurately, the computational load of each computing unit group in the distributed system can be balanced, and the processing efficiency can be improved.

According to one aspect of the present disclosure, a data processing apparatus applied to a distributed system is also provided. FIG. 6 illustrates a structural block diagram of a data processing apparatus 600 applied to a distributed system according to example embodiments of the present disclosure, where a plurality of computing units in the distributed system can constitute a plurality of computing unit groups, and data to be processed includes a plurality of data blocks. As shown in FIG. 6, the apparatus 600 includes:
a first division unit 601, configured to divide, for each of the plurality of data blocks, the data block into a plurality of first sub-blocks corresponding to the plurality of computing unit groups respectively;
a second division unit 602, configured to divide, for each first sub-block of the plurality of first sub-blocks, the first sub-block based on a target computing unit group corresponding to the first sub-block, into a plurality of second sub-blocks corresponding to the plurality of computing units in the target computing unit group, respectively;
a first processing unit 603, configured to determine, by processing each second sub-block of the plurality of second sub-blocks utilizing the corresponding computing unit of the second sub-block, a plurality of first processing results output by the plurality of computing units in the target computing unit group respectively; and
a second processing unit 604, configured to determine a processing result of the first sub-block by performing a data reduction operation on the plurality of first processing results utilizing the target computing unit group.

According to some embodiments, the plurality of computing units in the target computing unit group constitute a ring topology, and the second processing unit 604 comprises: an accumulation subunit configured to sequentially accumulate the first processing result of each computing unit in the computing unit group based on the arrangement order of the plurality of computing units in the target computing unit group in the ring topology; and a determination subunit configured to determine the processing result of the first sub-block based on the accumulated result.

According to some embodiments, the accumulation subunit is configured to perform the following actions utilizing each of the plurality of computing units in the target computing unit group: receiving data to be accumulated from a preceding computing unit located before the computing unit in the ring topology; determining intermediate data by accumulating the data to be accumulated and the first processing result of the computing unit; and sending the intermediate data to a succeeding computing unit located after the computing unit in the ring topology such that the succeeding computing unit can accumulate the intermediate data and the first processing result of the succeeding computing unit.

According to some embodiments, the data to be processed is obtained by utilizing a feature encoding network, and where the plurality of data blocks included in the data to be processed are obtained by utilizing a division operation as follows: dividing, based on the output dimension of the feature encoding network, the data to be processed into a plurality of data blocks of the same size.

According to some embodiments, the plurality of data blocks included in the data to be processed is obtained by utilizing a division operation as follows: dividing the data to be processed into a plurality of data blocks of the same size based on the output dimension of the feature encoding network and the data format of the data to be processed.

According to another aspect of the present disclosure, there is provided an electronic device, comprising: at least one processor; and a memory communicatively connected to the at least one processor; wherein the memory stores instructions executable by the at least one processor, and the instructions are executed by the at least one processor to enable the at least one processor to perform the above data processing method.

According to another aspect of the present disclosure, there is provided a non-transient computer-readable storage medium storing computer instructions, wherein the computer instructions are used to enable the computer to perform the above data processing method.

According to another aspect of the present disclosure, there is provided a computer program product, including an computer program, wherein the computer program implements the above data processing method when executed by a processor.

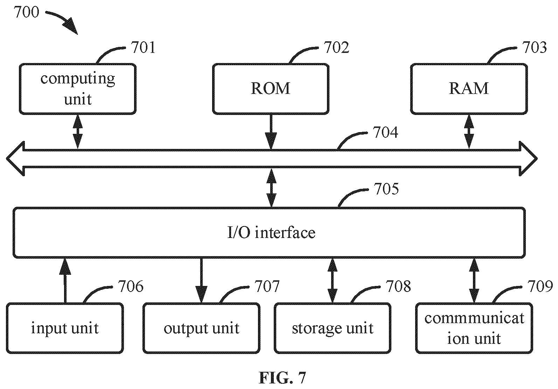

Referring to FIG. 7, a structural block diagram of an electronic device 700 that may be a server or client of the present disclosure is now described, which is an example of a hardware device that may be applicable to aspects of the present disclosure. Electronic devices are intended to represent various forms of digital electronic computer devices, such as laptop computers, desktop computers, workstations, personal digital assistants, servers, blade servers, mainframe computers, and other suitable computers. The electronic devices may also represent various forms of mobile devices, such as personal digital processing, cellular telephones, smart phones, wearable devices, and other similar computing devices. The components shown herein, their connections and relationships, and their functions are merely as examples, and are not intended to limit the implementations of the disclosure described and/or claimed herein.

As shown in FIG. 7, the electronic device 700 includes a computing unit 701, which may perform various appropriate actions and processing according to a computer program stored in a read-only memory (ROM) 702 or a computer program loaded into a random access memory (RAM) 703 from a storage unit 708. In the RAM 703, various programs and data required by the operation of the electronic device 700 may also be stored. The computing unit 701, the ROM 702, and the RAM 703 are connected to each other through a bus 704. Input/output (I/O) interface 705 is also connected to the bus 704.

A plurality of components in the electronic device 700 are connected to a I/O interface 705, including: an input unit 706, an output unit 707, a storage unit 708, and a communication unit 709. The input unit 706 may be any type of device capable of inputting information to the electronic device 700, the input unit 706 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 707 may be any type of device capable of presenting information, and may include, but are not limited to, a display, a speaker, a video/audio output terminal, a vibrator, and/or a printer. The storage unit 708 may include, but is not limited to, a magnetic disk and an optical disk. The communication unit 709 allows the electronic device 700 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth device, a 802.11 device, a WiFi device, a WiMAX device, a cellular communication device, and/or the like.

The computing unit 701 may be a variety of general and/or special purpose processing components with processing and computing capabilities. Some examples of the computing unit 701 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, etc. The computing unit 701 performs the various methods and processes described above, for example, the data process method. For example, in some embodiments, the data process method may be implemented as a computer software program tangibly contained in a machine-readable medium, such as the storage unit 708. In some embodiments, part or all of the computer program may be loaded and/or installed onto the electronic device 700 via the ROM 702 and/or the communication unit 709. When the computer program is loaded to the RAM 703 and executed by the computing unit 701, one or more steps of the data process method described above may be performed. Alternatively, in other embodiments, the computing unit 701 may be configured to perform the data process method by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system of system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in conjunction with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphic user interface or a web browser, the user may interact with implementations of the systems and techniques described herein through the graphic user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a block chain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely embodiments or examples, and the scope of the present disclosure is not limited by these embodiments or examples, but is only defined by the authorized claims and their equivalents. Various elements in the embodiments or examples may be omitted or may be replaced by equivalent elements thereof. Further, the steps may be performed in an order different from that described in the present disclosure. Further, various elements in the embodiments or examples may be combined in various ways. Importantly, with the evolution of the technology, many elements described herein may be replaced by equivalent elements appearing after the present disclosure.

## Claims

1. A data processing method applied to a distributed system, where a plurality of computing units in the distributed system can constitute a plurality of computing unit groups, and data to be processed includes a plurality of data blocks, comprising:
for each data block of the plurality of data blocks,
dividing(S201) the data block into a plurality of first sub-blocks corresponding to the plurality of computing unit groups respectively;
for each first sub-block of the plurality of first sub-blocks,
dividing(S202) the first sub-block, based on a target computing unit group corresponding to the first sub-block, into a plurality of second sub-blocks corresponding toa plurality of computing units in the target computing unit group respectively ;
determining(S203), by processing each second sub-block of the plurality of second sub-blocks utilizing the corresponding computing unit of the second sub-block, a plurality of first processing results output by the plurality of computing units in the target computing unit group respectively; and
determining(S204) a processing result of the first sub-block by performing a data reduction operation on the plurality of first processing results utilizing the target computing unit group.

2. The method according to claim 1, wherein the plurality of computing units in the target computing unit group constitute a ring topology, and wherein the determining a processing result of the first sub-block by performing a data reduction operation on the plurality of first processing results utilizing the target computing unit group comprises:
sequentially accumulating the first processing result of each computing unit in the target computing unit group based on the arrangement order of the plurality of computing units in the target computing unit group in the ring topology; and
determining a processing result of the first sub-block based on an accumulated result.

3. The method according to claim 2, wherein the sequentially accumulating the first processing result of each computing unit in the target computing unit group based on the arrangement order of the plurality of computing units in the target computing unit group in the ring topology comprises:
performing following actions utilizing each computing unit of the plurality of computing units in the target computing unit group:
receiving data to be accumulated from a preceding computing unit located before the computing unit in the ring topology;
determining intermediate data by accumulating the data to be accumulated and the first processing result of the computing unit; and
sending the intermediate data to a succeeding computing unit located after the computing unit in the ring topology, such that the succeeding computing unit can accumulate the intermediate data and the first processing result of the succeeding computing unit.

4. The method according to any one of claims 1-3, wherein the data to be processed is obtained by utilizing a feature encoding network, and wherein the plurality of data blocks included in the data to be processed are obtained by utilizing a division operation as follows: dividing, based on an output dimension of the feature encoding network, the data to be processed into the plurality of data blocks of the same size.

5. The method according to claim 4, wherein dividing the data to be processed into the plurality of data blocks of the same size based on an output dimension of the feature encoding network comprises: dividing the data to be processed into a plurality of data blocks of the same size based on the output dimension of the feature encoding network and the data format of the data to be processed.

6. A data processing apparatus applied to a distributed system, wherein a plurality of computing units in the distributed system can constitute a plurality of computing unit groups, and data to be processed includes a plurality of data blocks, comprising:
a first division unit(601), configured to divide, for each data block of the plurality of data blocks, the data block into a plurality of first sub-blocks corresponding to the plurality of computing unit groups respectively;
a second division unit(602), configured to divide, for each first sub-block of the plurality of first sub-blocks, based on a target computing unit group corresponding to the first sub-block, the first sub-block into a plurality of second sub-blocks corresponding to a plurality of computing units in the target computing unit group respectively;
a first processing unit(603), configured to determine, by processing each second sub-block of the plurality of second sub-blocks utilizing the corresponding computing unit of the second sub-block, a plurality of first processing results output by the plurality of computing units in the target computing unit group respectively; and
a second processing unit(604), configured to determine a processing result of the first sub-block by performing a data reduction operation on the plurality of first processing results utilizing the target computing unit group.

7. The device according to claim 6, wherein the plurality of computing units in the target computing unit group constitute a ring topology, and wherein the second processing unit comprises:
an accumulation subunit, configured to sequentially accumulate the first processing result of each computing unit in the target computing unit group based on the arrangement order of the plurality of computing units in the target computing unit group in the ring topology; and
a determination subunit, configured to determine the processing result of the first sub-block based on an accumulated result.

8. The apparatus according to claim 7, wherein the accumulation subunit is configured to perform the following actions utilizing each computing unit of the plurality of computing units in the target computing unit group:
receiving data to be accumulated from a preceding computing unit located before the computing unit in the ring topology;
determining intermediate data by accumulating the data to be accumulated and the first processing result of the computing unit; and
sending the intermediate data to a succeeding computing unit located after the computing unit in the ring topology such that the succeeding computing unit can accumulate the intermediate data and the first processing result of the succeeding computing unit.

9. The apparatus according to any one of claims 6-8, wherein the data to be processed is obtained by utilizing a feature encoding network, and wherein the plurality of data blocks included in the data to be processed are obtained by utilizing a division operation as follows: dividing, based on an output dimension of the feature encoding network, the data to be processed into the plurality of data blocks of the same size.

10. The apparatus according to claim 9, wherein the plurality of data blocks included in the data to be processed are obtained by utilizing a division operation as follows: dividing the data to be processed into the plurality of data blocks of the same size based on the output dimension of the feature encoding network and the data format of the data to be processed.

11. A non-transitory computer-readable storage medium storing computer instructions, wherein the computer instructions are used to enable a computer to perform the method of any one of claims 1-5.

12. A computer program product, including a computer program, wherein the computer program is able to implement the method of any one of claims 1-5 when executed by a processor.
